# EUROPEAN PATENT APPLICATION

(11) **EP 2 184 626 A1**
(43) Date of publication of application: **12.05.2010**
(21) Application number: 08738774.2
(22) Date of filing: 24.03.2008
(51) Int. Cl.: G02B 5/02, F21S 2/00, F21V 5/00, F21V 5/04, G02B 3/00, G02F 1/13357, F21Y 103/00

(54) **METHOD FOR MANUFACTURING OPTICAL MEMBER, PARENT MATERIAL FOR MANUFACTURE OF OPTICAL MEMBER, TRANSFER MOLD, LIGHTING SYSTEM FOR DISPLAY DEVICE, DISPLAY DEVICE, AND TELEVISION RECEIVER**

(30) Priority: 28.08.2007 JP 2007221540
(71) Applicant: Sharp Kabushiki Kaisha, Osaka-shi, Osaka 545-8522 (JP)
(72) Inventor: TAKATA, Yoshiki, Abeno-ku Osaka-shi Osaka 545-8522 (JP)
(74) Representative: Müller-Boré & Partner Patentanwälte
(86) International application number: PCT/JP2008/055435
(87) International publication number: WO 2009/028226

(57) **Abstract**

Characterized by including the steps of: molding a hardening resin formed on a face of a translucent sheet 126 into a shape of a convex lens group 30 having a plurality of convex lenses 29 disposed in parallel arrangement; performing exposure L of a photosensitive adhesive layer formed on a face of the translucent sheet 126 through the convex lens group 30, the side being on an opposite side; and forming a light-reflective material on the photosensitive adhesive layer after the exposure L is performed. The molding step is to mold the shape of the convex lens group 30 with a longitudinal direction of the convex lenses 29 inclined to an edge side direction of the translucent sheet 126.

## Description

### TECHNICAL FIELD

The present invention relates to an optical member manufacturing method, a parent material for use in manufacturing the optical member, a transfer mold, a lighting device for use in a display device, a display device, and a television receiver.

### BACKGROUND ART

A liquid crystal display device is generally configured by a liquid crystal panel and a backlight. The liquid crystal panel is a display panel. The backlight is an external light source disposed on a back face side of the liquid crystal. The backlight includes a plurality of cold cathode tubes, which is linear light sources, and an optical member on a light emission side of the cold cathode tubes. The optical member is for changing the light emitted from each of the cold cathode tubes into uniformly flat one. The optical member can have a plurality of laminated sheets having, for example, a diffuser plate, a diffusing sheet, a lens sheet, and a brightness enhancement sheet. With such an optical member having the laminated configuration, the emission light tends to be diffused in a direction not to be used for display, and the light usage efficiency is lower. Against this backdrop, an illustration of an optical member improved in light usage efficiency is disclosed in, for example, Patent Document 1.
[Patent Document 1] Japanese Unexamined Patent Application Publication No. 2005-221619

### (Problem to Be Solved by the Invention)

The optical member disclosed in the Patent Document 1 is provided with a lens portion on a face thereof and a reflection layer on the other face. The lens portion has a plurality of unit lenses disposed in arrangement. The reflection layer has openings. In this case, the reflection layer is disposed in areas corresponding to light non-condensing portions of the unit lenses, while the openings are disposed in areas corresponding to light condensing portions of the unit lenses. Accordingly, by adjusting the ratio of the size of the reflection layer to the size of the openings, the light-diffusing angle can easily be controlled. This can reduce the emission light in the direction not to be used for display and can improve the light usage efficiency.

However, use of such an optical member can be a potential cause of a problem as follows: in a case of interference caused between the arrangement of pixels included in the liquid crystal panel and the arrangement of unit lenses configuring the lens portion, an interference pattern called moire can appear. Such moire can be a cause of lower visibility of the display device and lower display quality.

Accordingly, as a method to avoid such moire, there is a technique to cut the optical member from a roll-shaped sheet so that the arrangement of the lens portion is inclined to the edge side direction of the optical member. That is, by cutting the rectangular optical member from the sheet having the unit lenses, which are disposed in arrangement along the lengthwise direction, with the edge side direction of the optical member oblique to the arrangement direction of the unit lenses (the longitudinal direction of the sheet), the arrangement of the unit lenses becomes inclined to the edge side direction of the rectangular optical member. Then, by placing this optical member with the edge side direction thereof parallel to the edge side direction of the rectangular liquid crystal panel, displacement can be caused between the arrangement of the pixels and the arrangement of the unit lenses configuring the lens portion; as a result of this, the interference therebetween can be reduced, and generation of moire or visibility of moire can be reduced. However, in this cutting method, cutting is performed obliquely to the longitudinal direction of the roll-shaped sheet. Therefore, the cutting-out performance with the cutting is lower, and the economies of mass production are extremely lower.

### DISCLOSURE OF THE INVENTION

The present invention was achieved in the circumstances as above, and its object is to provide a method that can achieve a high degree of efficiency, economies of mass production, and cost reduction in manufacturing an optical member capable of, when used as, for example, a backlight of a liquid crystal panel etc., reducing occurrence of defect such as moire in a simple and easy manner and, moreover, can direct or diffuse light and thereby change it into flat one.
Furthermore, another object of the present invention is also to provide a parent material for use in manufacturing the optical member, the parent material being capable of acquiring the optical member in a simple and easy manner, the optical member being, when applied to a display device, unlikely to cause moire and can direct or diffuse the light source light and thereby change the light into the flat one.
Furthermore, another object of the present invention is to provide a transfer mold suitable for manufacturing such an optical member.
Furthermore, another object of the present invention is to provide a lighting device for a display device, the lighting device including such an optical member.
Furthermore, another object of the present invention is to provide the display device including such a lighting device for the display device and, further, a television receiver including such a display device.

### (Means for Solving the Problem)

In order to solve the above-described problems, an aspect of the optical member manufacturing method in accordance with the present invention is characterized by including the steps of: forming a hardening resin layer on a face of a translucent sheet; molding the hardening resin into a shape of a convex lens group having a plurality of convex lenses disposed in parallel arrangement; hardening the hardening resin layer; forming a photosensitive adhesive layer on a face of the translucent sheet, the face being on a side opposite from a side where the convex lens group has been formed; exposing the photosensitive adhesive layer through the convex lens group; and forming a light-reflective material on the photosensitive adhesive layer after the exposing is performed. The molding step is to mold the shape of the convex lens group with a longitudinal direction of the convex lenses inclined to an edge side direction of the translucent sheet. In the exposing step, a non-exposed portion is formed in the photosensitive adhesive layer correspondingly to a boundary portion due to condensing operation of the convex lens group so that the non-exposed portion shall include adhesive properties while an exposed portion not including the adhesive properties, the boundary portion being between the convex lenses configuring the convex lens group. In the step of forming the light-reflective material, the light-reflective material is selectively formed on the non-exposed portion of the photosensitive adhesive layer.

This manufacturing method makes it possible to reduce the cost in manufacturing the one that can suitably change the light into flat light and is, when applied to the display device etc., unlikely to cause, or unlikely to allow the visibility of, the display defect such as moire. Specifically, because the convex lenses are formed by lens molding with the longitudinal direction thereof inclined to the edge side direction of the translucent sheet, it is unnecessary to cut the translucent sheet in a direction oblique to the edge side direction thereof (i.e. an edge side direction of the optical member) as conventionally done so that the longitudinal direction of the lenses are inclined to the edge side direction of the optical member. Accordingly, the manufacturing method is unlikely to cause possibility of reducing the cutting-out performance for the sheet, is significantly highly effective, and achieves economic mass production. Furthermore, in the exposing step, due to the condensing operation of the convex lens group, the adhesive non-exposed portion is formed on the photosensitive adhesive layer and correspondingly to the boundary portion of the convex lenses configuring the convex lens group, and the light-reflective material is selectively formed to the non-exposed portion having the adhesive properties. That is, along the inclination of the convex lenses, the light-reflective layer composed of the light-reflective material is selectively formed in arrangement, and, consequently, the longitudinal direction of the light-reflective layer is also formed with inclined to the edge side direction of the translucent sheet. Thus, in the present invention, the convex lenses are molded with inclined to the edge side direction of the translucent sheet, so that the exposing step is applied to the photosensitive adhesive layer through the lenses, and, thereafter, the light-reflective material is formed. With this technique, the light-reflective layer can be selectively formed in the lens boundary portions in the extremely simple and easy manner. Then, finally, the lenses inclined to the edge side direction can be formed simply by cutting the translucent sheet with the lenses and the light-reflective layer perpendicular to the edge side direction of the sheet. Also when they are used in the lighting device for the display device, displacement can be formed between the pixel arrangement of the display device and the lens arrangement. Therefore, the optical member that is unlikely to cause, or is unlikely to allow for the visibility of, the display defect such as moire etc. can be provided in a simple and easy manner.

Here, in the molding step of the above-described manufacturing method, the longitudinal direction of the convex lenses may be inclined at from 3° to 10° to the edge side direction of the translucent sheet. Molding with the inclination of this range makes it possible to provide the optical member that is unlikely to cause moire with respect to display panels of various sizes and is capable of improving the visual angle characteristics.

Furthermore, more preferably, the longitudinal direction of the convex lenses may be inclined at from 4° to 7° to the edge side direction of the translucent sheet. Molding with the inclination of this range makes it possible to provide the optical member that is still more surely unlikely to cause moire with respect to the display panels of various sizes and is capable of still more improving the visual angle characteristics.

On the other hand, in order to solve the above-described problem, another aspect of the optical member manufacturing method in accordance with the present invention is characterized by including the steps of: forming a hardening resin layer on a face of a translucent sheet; molding the hardening resin into a shape of a convex lens group having a plurality of convex lenses disposed in parallel arrangement; hardening the hardening resin layer; forming a photosensitive adhesive layer on a face of the translucent sheet, the face being on a side opposite from a side where the convex lens group has been formed; exposing the photosensitive adhesive layer through the convex lens group; and forming a light-reflective material on the photosensitive adhesive layer after the exposing is performed. The molding step is to mold each of the convex lenses in a shape having a zigzag structure repetitively meandering in a longitudinal direction thereof. In the exposing step, a non-exposed portion is formed in the photosensitive adhesive layer correspondingly to a boundary portion due to condensing operation of the convex lens group so that the non-exposed portion shall include adhesive properties while an exposed portion not including the adhesive properties, the boundary portion being between the convex lenses configuring the convex lens group. In the step of forming the light-reflective material, the light-reflective material is selectively formed on the non-exposed portion of the photosensitive adhesive layer.

This manufacturing method makes it possible to reduce the cost in manufacturing the one that can suitably change the light into flat light and is, when applied to the display device etc., unlikely to cause, or unlikely to allow the visibility of, the display defect such as moire. Specifically, because the convex lenses are formed on the translucent sheet by lens molding in the shape having the zigzag structure repetitively meandering in the longitudinal direction, at least one portion of the meandering is inclined to the edge side direction of the translucent sheet. Accordingly, it is unnecessary to cut the translucent sheet in a direction oblique to the edge side direction thereof (i.e. an edge side direction of the optical member) as conventionally done so that the longitudinal direction of the lenses are inclined to the edge side direction of the optical member. Accordingly, the manufacturing method is unlikely to cause possibility of reducing the cutting-out performance for the sheet, is significantly highly effective, and achieves economic mass production. Furthermore, in the exposing step, due to the condensing operation of the convex lens group, the non-exposed portion having the adhesive properties is formed on the photosensitive adhesive layer and correspondingly to the boundary portion of the convex lenses configuring the convex lens group, and the light-reflective material is selectively formed to the non-exposed portion having the adhesive properties. That is, along the zigzag structure of the convex lenses, the light-reflective layer composed of the light-reflective material is selectively formed in arrangement, and, consequently, the light-reflective layer also meanders with at least one portion thereof inclined to the edge side direction of the translucent sheet. Thus, in the present invention, the convex lenses are molded with the meandering zigzag structure, so that the exposing step is applied to the photosensitive adhesive layer through the lenses, and, thereafter, the light-reflective material is formed. With this technique, the light-reflective layer can be selectively formed in the lens boundary portions in the extremely simple and easy manner. Then, finally, the lenses inclined to the edge side direction can be formed simply by cutting the translucent sheet with the lenses and the light-reflective layer perpendicular to the edge side direction of the sheet. Also when they are used in the lighting device for the display device, displacement can be formed between the pixel arrangement of the display device and the lens arrangement. Therefore, the optical member that is unlikely to cause, or is unlikely to allow for the visibility of, the display defect such as moire etc. can be provided in a simple and easy manner.

Here, in the molding step of the above-described manufacturing method, the meandering of the convex lenses may be inclined at from 3° to 10° to the edge side direction of the translucent sheet. Molding with the inclination of this range makes it possible to provide the optical member that is unlikely to cause moire with respect to display panels of various sizes and is capable of improving the visual angle characteristics.

Furthermore, more preferably, the meandering of the convex lenses may be inclined at from 4° to 7° to the edge side direction of the translucent sheet. Molding with the inclination of this range makes it possible to provide the optical member that is still more surely unlikely to cause moire with respect to the display panels of various sizes and is capable of still more improving the visual angle characteristics.

On the other hand, in order to solve the above-described problem, another aspect of the optical member manufacturing method in accordance with the present invention is characterized by including the steps of: forming a hardening resin layer on a face of a translucent sheet; molding the hardening resin into a shape of a convex lens group having a plurality of convex lenses disposed in parallel arrangement; hardening the hardening resin layer; forming a photosensitive adhesive layer on a face of the translucent sheet, the face being on a side opposite from a side where the convex lens group has been formed; exposing the photosensitive adhesive layer through the convex lens group; and forming a light-reflective material on the photosensitive adhesive layer after the exposing is performed. The molding step is to mold each of the convex lenses in a shape having a first side portion and a second side portion that are repetitively formed in a longitudinal direction thereof, the first side portion being parallel to an edge side direction of the translucent sheet, the second side portion being inclined to the edge side direction of the translucent sheet. In the exposing step, a non-exposed portion is formed in the photosensitive adhesive layer correspondingly to a boundary portion due to condensing operation of the convex lens group so that the non-exposed portion shall include adhesive properties while an exposed portion not including the adhesive properties, the boundary portion being between the convex lenses configuring the convex lens group. In the step of forming the light-reflective material, the light-reflective material is selectively formed on the non-exposed portion of the photosensitive adhesive layer.

This manufacturing method makes it possible to reduce the cost in manufacturing the one that can suitably change the light into flat light and is, when applied to the display device etc., unlikely to cause, or unlikely to allow the visibility of, the display defect such as moire. Specifically, the convex lenses are formed on the translucent sheet by lens molding in the shape having the first side portion and a second side portion that are repetitively formed in the longitudinal direction thereof, the first side portion being parallel to an edge side direction of the translucent sheet, the second side portion being inclined to the edge side direction of the translucent sheet. Therefore, at least the second side portion is inclined to the edge side direction of the translucent sheet, and it is unnecessary to cut the translucent sheet in a direction oblique to the edge side direction thereof (i.e. an edge side direction of the optical member) as conventionally done so that the longitudinal direction of the lenses are inclined to the edge side direction of the optical member. Accordingly, the manufacturing method is unlikely to cause possibility of reducing the cutting-out performance for the sheet, is significantly highly effective, and achieves economic mass production. Furthermore, in the exposing step, due to the condensing operation of the convex lens group, the non-exposed portion having the adhesive properties is formed on the photosensitive adhesive layer and correspondingly to the boundary portion of the convex lenses configuring the convex lens group, and the light-reflective material is selectively formed to the non-exposed portion having the adhesive properties. That is, along the inclination of the convex lenses, the light-reflective layer composed of the light-reflective material is selectively formed in arrangement, and, consequently, at the at least one portion of the light-reflective layer is formed with inclined to the edge side direction of the translucent sheet. Thus, in the present invention, the convex lenses are molded with the first side portion and the second side portion. With this technique, the light-reflective layer can be selectively formed in the lens boundary portions in the extremely simple and easy manner. Then, finally, the lenses inclined to the edge side direction can be formed simply by cutting the translucent sheet with the lenses and the light-reflective layer perpendicular to the edge side direction of the sheet. Also when they are used in the lighting device for the display device, displacement can be formed between the pixel arrangement of the display device and the lens arrangement. Therefore, the optical member that is unlikely to cause, or is unlikely to allow for the visibility of, the display defect such as moire etc. can be provided in a simple and easy manner.

Here, in the molding step of the above-described manufacturing method, the second side portions of the convex lenses may be inclined at from 3° to 10° to the edge side direction of the translucent sheet. Molding with the inclination of this range makes it possible to provide the optical member that is unlikely to cause moire with respect to display panels of various sizes and is capable of improving the visual angle characteristics.

Furthermore, more preferably, the second side portions of the convex lenses may be inclined at from 4° to 7° to the edge side direction of the translucent sheet. Molding with the inclination of this range makes it possible to provide the optical member that is still more surely unlikely to cause moire with respect to the display panels of various sizes and is capable of still more improving the visual angle characteristics.

Each aspect of the manufacturing method may include the step of, after the step of forming the light-reflective material, forming a diffusing sheet on a face on a side where the light-reflective material has been formed. Formation of the above-described diffusing sheet makes it possible to give diffuseness to the optical member.

Next, in order to solve the above-described problem, an aspect of the parent material for use in manufacturing the optical member in accordance with the present invention is characterized by including: a translucent sheet; a convex lens group that is formed on a face of the translucent sheet and has a plurality of convex lenses disposed in parallel arrangement; and a light-reflective layer selectively disposed on a face of the translucent sheet and correspondingly to a boundary portion of the convex lenses configuring the convex lens group, the face being on a side opposite from a side where the convex lens group has been formed. The convex lens group is disposed in an arrangement with a longitudinal direction of the convex lenses inclined to an edge side direction of the translucent sheet.

This parent material for use in manufacturing the optical member makes it possible to reduce the cost in providing the optical member that can direct light in a predetermined direction only by being cut perpendicular to the edge side direction of the translucent sheet and that is, when applied to the display device, unlikely to cause, or is unlikely to allow for the visibility of, the display defect such as moire etc. Specifically, because the longitudinal direction of the convex lenses is inclined to the edge side direction of the translucent sheet, it is unnecessary to cut the translucent sheet in a direction oblique to the edge side direction thereof (i.e. an edge side direction of the optical member) as conventionally done so that the longitudinal direction of the lenses are inclined to the edge side direction of the optical member. This makes it possible to provide the parent material for use in manufacturing the optical member, the parent material being unlikely to cause possibility of reducing the cutting-out performance of the sheet, being significantly highly effective, and achieving economic mass production. Note that the translucent sheet should be rolled up in a roll-like manner. In this case, a predetermined length can be pulled out from the roll-like sheet and then be successively cut.

In the above-described parent material for use in manufacturing the optical member, the longitudinal direction of the convex lenses may be inclined at from 3° to 10° to the edge side direction of the translucent sheet. The inclination of this range makes it possible to provide the optical member that is unlikely to cause moire with respect to display panels of various sizes and is capable of improving the visual angle characteristics.

Furthermore, more preferably, the longitudinal direction of the convex lenses may be inclined at from 4° to 7° to the edge side direction of the translucent sheet. The inclination of this range makes it possible to provide the optical member that is still more surely unlikely to cause moire with respect to the display panels of various sizes and is capable of still more improving the visual angle characteristics.

On the other hand, in order to solve the above-described problem, another aspect of the parent material for use in manufacturing the optical member in accordance with the present invention is characterized by including: a translucent sheet; a convex lens group that is formed on a face of the translucent sheet and has a plurality of convex lenses disposed in parallel arrangement; and a light-reflective layer selectively disposed on a face of the translucent sheet and correspondingly to a boundary portion of the convex lenses configuring the convex lens group, the face being on a side opposite from a side where the convex lens group has been formed. The convex lens group has each of the convex lenses configured in a shape having a zigzag structure repetitively meandering in a longitudinal direction thereof.

This parent material for use in manufacturing the optical member makes it possible to reduce the cost in providing the optical member that can direct light in a predetermined direction only by being cut perpendicular to the edge side direction of the translucent sheet and that is, when applied to the display device, unlikely to cause, or is unlikely to allow for the visibility of, the display defect such as moire etc. Specifically, because the convex lenses have the zigzag structure repetitively meandering in a longitudinal direction, it is unnecessary to cut the translucent sheet in a direction oblique to the edge side direction thereof (i.e. an edge side direction of the optical member) as conventionally done so that the longitudinal direction of the lenses are inclined to the edge side direction of the optical member. This makes it possible to provide the parent material for use in manufacturing the optical member, the parent material being unlikely to cause possibility of reducing the cutting-out performance of the sheet, being significantly highly effective, and achieving economic mass production. Note that the translucent sheet should be rolled up in a roll-like manner. In this case, a predetermined length can be pulled out from the roll-like sheet and then be successively cut.

In the above-described parent material for use in manufacturing the optical member, the meandering of the convex lenses may be inclined at from 3° to 10° to the edge side direction of the translucent sheet. The inclination of this range makes it possible to provide the optical member that is unlikely to cause moire with respect to display panels of various sizes and is capable of improving the visual angle characteristics.

Furthermore, more preferably, the meandering of the convex lenses may be inclined at from 4° to 7° to the edge side direction of the translucent sheet. The inclination of this range makes it possible to provide the optical member that is still more surely unlikely to cause moire with respect to the display panels of various sizes and is capable of still more improving the visual angle characteristics.

On the other hand, in order to solve the above-described problem, another aspect of the parent material for use in manufacturing the optical member in accordance with the present invention is characterized by including: a translucent sheet; a convex lens group that is formed on a face of the translucent sheet and has a plurality of convex lenses disposed in parallel arrangement; and a light-reflective layer selectively disposed on a face of the translucent sheet and correspondingly to a boundary portion of the convex lenses configuring the convex lens group, the face being on a side opposite from a side where the convex lens group has been formed. The convex lens group has each of the convex lenses configured in a shape having a first side portion and a second side portion that are repetitively formed in a longitudinal direction thereof, the first side portion being parallel to an edge side direction of the translucent sheet, the second side portion being inclined to the edge side direction of the translucent sheet.

This parent material for use in manufacturing the optical member makes it possible to reduce the cost in providing the optical member that can direct light in a predetermined direction only by being cut perpendicular to the edge side direction of the translucent sheet and that is, when applied to the display device, unlikely to cause, or is unlikely to allow for the visibility of, the display defect such as moire etc. Specifically, because the convex lenses have the second side portions inclined to the edge side direction of the translucent sheet, it is unnecessary to cut the translucent sheet in a direction oblique to the edge side direction thereof (i.e. an edge side direction of the optical member) as conventionally done so that the longitudinal direction of the lenses are inclined to the edge side direction of the optical member. This makes it possible to provide the parent material for use in manufacturing the optical member, the parent material being unlikely to cause possibility of reducing the cutting-out performance of the sheet, being significantly highly effective, and achieving economic mass production. Note that the translucent sheet should be rolled up in a roll-like manner. In this case, a predetermined length can be pulled out from the roll-like sheet and then be successively cut.

In the above-described parent material for use in manufacturing the optical member, the second side portions of the convex lenses may be inclined at from 3° to 10° to the edge side direction of the translucent sheet. The inclination of this range makes it possible to provide the optical member that is unlikely to cause moire with respect to display panels of various sizes and is capable of improving the visual angle characteristics.

Furthermore, more preferably, the second side portions of the convex lenses may be inclined at from 4° to 7° to the edge side direction of the translucent sheet. The inclination of this range makes it possible to provide the optical member that is still more surely unlikely to cause moire with respect to the display panels of various sizes and is capable of still more improving the visual angle characteristics.

Note that, in each aspect of the parent material for use in manufacturing the optical member, a diffusing sheet adhered to the translucent sheet in a manner holding the light-reflective layer therebetween may be further included. Including this diffusing sheet makes it possible to give diffuseness to the obtained optical member.

Next, in order to solve the above-described problem, the transfer mold in accordance with the present invention is characterized by consisting of: a drum-like roller having a concave lens shape formed on a surface thereof. The roller abuts on the sheet while rotating accompanying the conveyance of the sheet. The concave lens shape is formed with inclined to a rotating direction of the roller. Such a transfer mold makes it possible to suitably manufacture the optical member that is unlikely to allow for the visibility of the display defect such as moire. Note that the concave lens shape is formed in a spiral manner on a peripheral face of the roller.

Next, in order to solve the above-described problem, the lighting device for the display device in accordance with the present invention is characterized by including a light source and the optical member disposed on the light emission side of the light source. Such a lighting device for the display device makes it possible to suitably supply uniform flat illumination light. This also makes it possible to realize the display that is unlikely to cause the display defect such as moire is visible etc. in the display device and that is superior in the visual angle characteristics.

Next, in order to solve the above-described problem, the display device in accordance with the present invention is characterized by including: the above-described lighting device for the display device; and the display panel disposed on the light emission side of the lighting device for the display device. Such a display device makes it possible to realize the display that is unlikely to cause the display defect such as moire is visible etc. and that is superior in the visual angle characteristics. Note that, as the display panel, a liquid crystal panel having a liquid crystal layer held between a pair of substrates etc. can be illustrated. Furthermore, the display device can be suitably used as the television receiver.

### (Effect of the Invention)

The present invention makes it possible to provide a method that can achieve a high degree of efficiency, economies of mass production, and cost reduction in manufacturing the optical member capable of, when used as, for example, a backlight of a liquid crystal panel etc., reducing occurrence of defect such as moire in a simple and easy manner and, moreover, can direct or diffuse light and thereby change it into flat one. Furthermore, the present invention makes it possible to provide a parent material for use in manufacturing the optical member, the parent material being capable of acquiring the optical member in a simple and easy manner, the optical member being, when applied to a display device, unlikely to cause moire and can direct or diffuse the light source light and thereby change the light into the flat one. Furthermore, the present invention makes it possible to provide a transfer mold suitable for manufacturing such an optical member. Furthermore, the present invention makes it possible to provide a lighting device for a display device, the lighting device including such an optical member. Furthermore, the present invention makes it possible to provide the display device including such a lighting device for the display device and, further, a television receiver including such a display device.

### BRIEF DESCRIPTION OF THE DRAWINGS

Fig. 1 is an exploded perspective view illustrating a general configuration of a liquid crystal display device of this embodiment;
Fig. 2 is a sectional view illustrating the general configuration of the liquid crystal display device of this embodiment;
Fig. 3 is a perspective view illustrating an embodiment of a television receiver using the liquid crystal display device;
Fig. 4 is an explanatory view illustrating a schematic of pixel arrangement of the liquid crystal display device;
Fig. 5 is a sectional view illustrating a configuration of an optical member;
Fig. 6 is a plan view illustrating the optical member;
Fig. 7 is an explanatory view illustrating operation of the liquid crystal display device of this embodiment;
Fig. 8 is an explanatory view illustrating a schematic concerning steps of manufacturing the optical member;
Fig. 9 is an explanatory view illustrating a schematic configuration of a transfer mold used in a transfer step (a molding step);
Fig. 10 is an explanatory view illustrating an exposing manner in an exposing step;
Fig. 11 is an explanatory view illustrating a result of the exposing;
Fig. 12 is an explanatory view illustrating a step of forming light-reflective layers;
Fig. 13 is an explanatory view illustrating steps after the light-reflective layers are formed;
Fig. 14 is an explanatory view illustrating a configuration of a parent material for use in manufacturing the optical member manufactured in the steps of Figs. 8 through 13;
Fig. 15 is an explanatory view illustrating a modification of the parent material for use in manufacturing the optical member; and
Fig. 16 is an explanatory view illustrating another modification of the parent material for use in manufacturing the optical member.

### (Explanation of Reference Characters)

1... television receiver; 10... liquid crystal display device (display device) ; 11... liquid crystal panel (display panel) ; 12... backlight device (lighting device for display device); 13... bezel; 14... chassis; 15... optical member; 17... cold cathode tube (light source); 24... non-exposed portion (adhesive layer); 24a... exposed portion (non-adhesive layer); 26... translucent base material (translucent sheet); 27... diffusing sheet; 28... lens sheet; 29... convex cylindrical lens; 30... lens portion (convex cylindrical lens group); 31... translucent portion; 32... light-reflective layer; 126... translucent sheet roll (translucent sheet); 150... parent material for use in manufacturing optical member; 220... transfer mold; 221... concave lens shape; PE... pixel

### BEST MODE FOR CARRYING OUT THE INVENTION

An embodiment in accordance with the present invention will be described with reference to drawings.

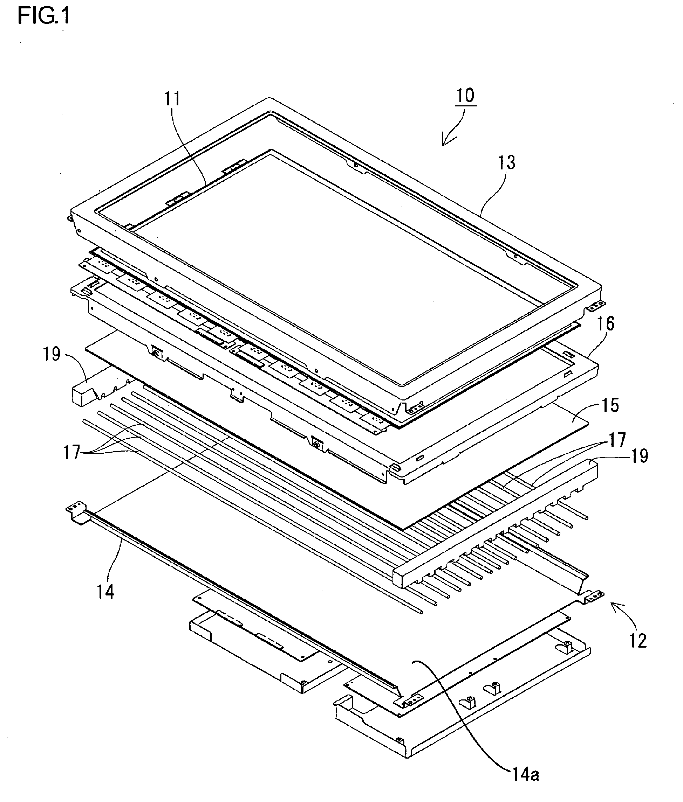

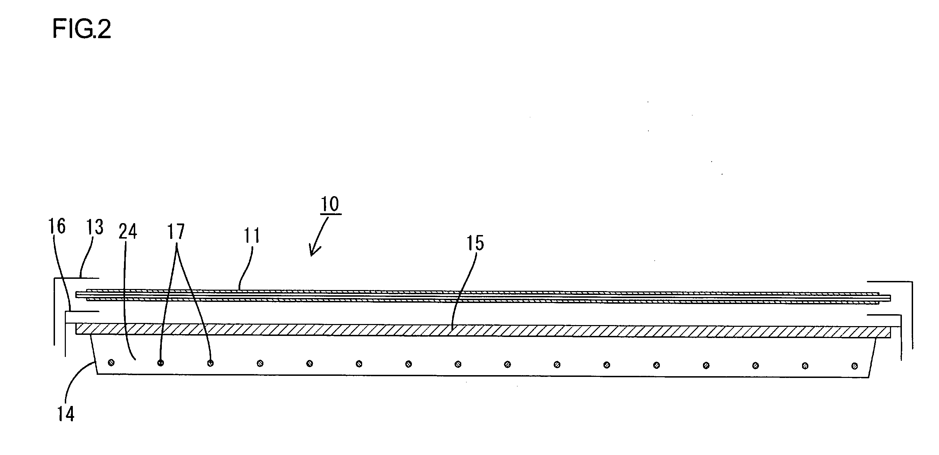

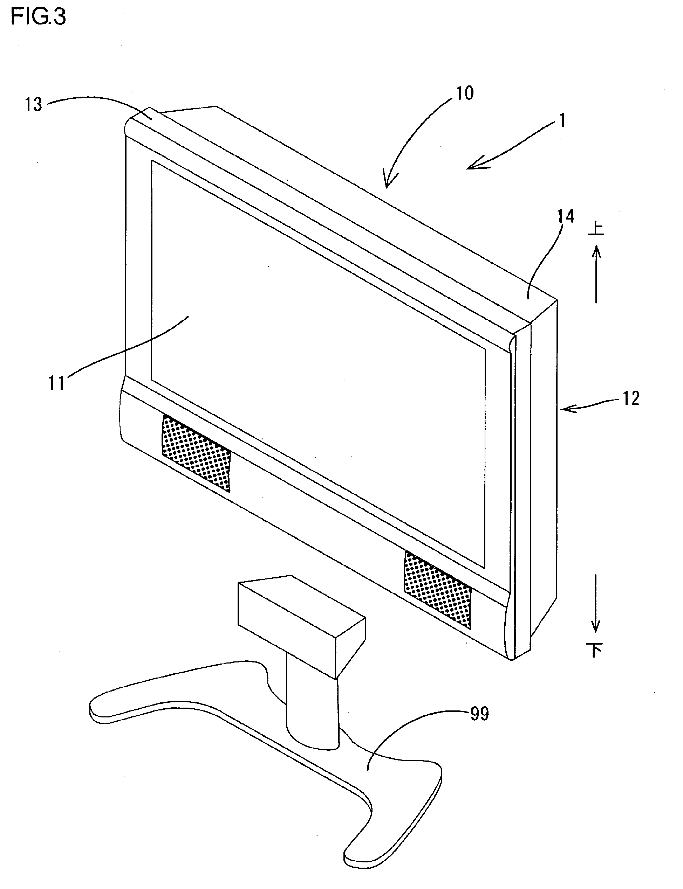

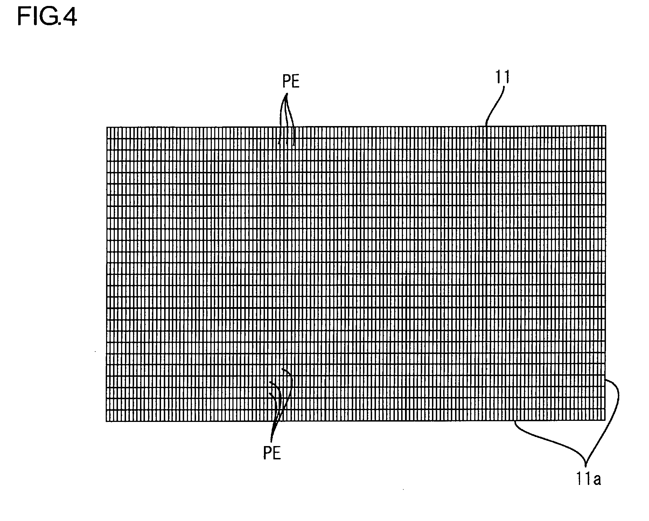

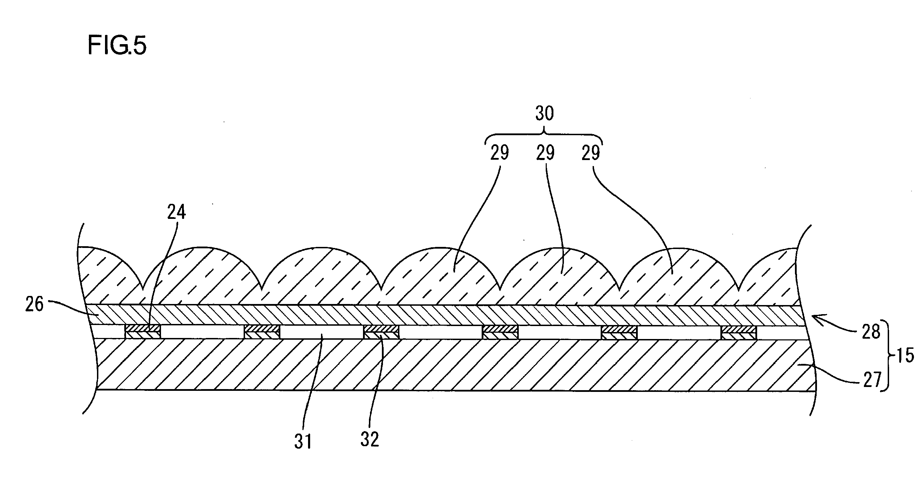

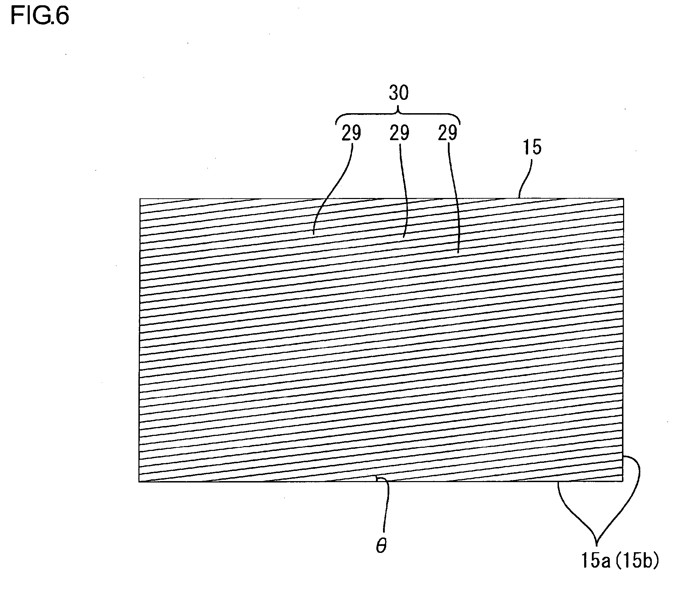

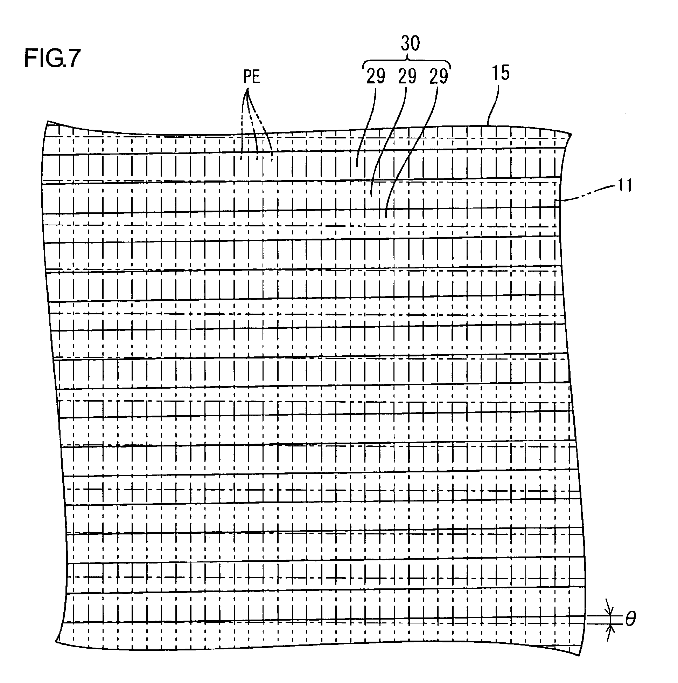

Fig. 1 is an exploded perspective view illustrating a general configuration of a liquid crystal display device (a display device) 10 of this embodiment; Fig. 2 is a sectional view illustrating the general configuration of the liquid crystal display device 10 of this embodiment; and Fig. 3 is a perspective view illustrating an embodiment of a television receiver using the liquid crystal display device 10. Furthermore, Fig. 4 is an explanatory view illustrating a schematic of pixel arrangement of the liquid crystal display device 10; Fig. 5 is a sectional view illustrating a configuration of an optical member 15; Fig. 6 is a plan view illustrating the optical member 15; and Fig. 7 is an explanatory view illustrating operation of the liquid crystal display device 10 of this embodiment.

First, a general schematic of the liquid crystal display device (the display device) 10 will be described.
As illustrated in Figs. 1 and 2, the liquid crystal display device 10 includes a liquid crystal panel (a display panel) 11 and a backlight device (a lighting device for a display device) 12 that are integrally held by a bezel 13 etc. The liquid crystal panel 11 has a rectangular shape in planar view. The backlight device 12 is an external light source. The liquid crystal display device 10 can be applied to, for example, a television receiver 1 as illustrated in Fig. 3. The television receiver 1 is configured by the liquid crystal display device 10, which includes the liquid crystal panel 11 and the backlight deice 12 that are integrated with the bezel 13, and a stand 99 that supports the liquid crystal display device 10 from below.

The liquid crystal panel 11 has liquid crystal (a liquid crystal layer) filled between a transparent TFT substrate and a transparent CF substrate, and the liquid crystal has optical characteristics that vary as voltage is applied, which is a known configuration. A large number of source lines and gate lines are provided on the inner face of the TFT substrate and form a grid shape with the source lines extending in a longitudinal direction and the gate lines extending in a widthwise direction. Moreover, square areas surrounded by both the lines are provided with a large number of pixels PE (see Fig. 4) disposed in matrix. The arrangement of the pixels PE (pixel arrangement) is, as illustrated in Fig. 4, parallel to end edges 11a on a long-side side and on a short-side side of the liquid crystal panel 11. Note that the line pitch and the arrangement pitch of the pixels PE may be changed depending on the screen size and the number of pixels of the liquid crystal panel 11. For example, in a liquid crystal panel 11 having a 45-inch screen size and 1920 * 1080 pixels, the arrangement pitch of the pixels PE (the pixel pitch) is 513 µm on the long-side side and 171 µm on the short-side side (a third the length of the long-side side).

On the other hand, the CF substrate is provided with a color filter composed of red (R), green (G), and blue (B). Moreover, polarizing plates are stuck on faces of the two substrates, the faces being on the sides opposite from the liquid crystal side.

The backlight device 12 is a backlight of a so-called direct-light type having the light source directly facing the liquid crystal panel 11. The backlight device 12 is configured by a chassis 14, a reflector sheet 14a, the optical member 15, a frame 16, a plurality of cold cathode tubes 17, and lamp holders 19. The chassis 14 is open on the front side (a light emission side). The reflector sheet 14a is laid in the chassis 14. The optical member 15 is attached to the opening portion of the chassis 14. The frame 16 is for fastening the optical member. The cold cathode tubes 17 are accommodated in the chassis 14. The lamp holders 19 are for positioning and fastening the cold cathode tubes 17 on the chassis 14.

The chassis 14 is made of metal and is formed in a substantial box shape, which is rectangular in planar view, with the front side (the light emission side) open. The reflector sheet 14a is made of synthetic resin. A white member that is superior in reflectivity is adopted to the reflector sheet 14a. The reflector sheet 14a is laid on the inner face of the chassis 14 in a manner covering a substantially entire area thereof. The reflector sheet 14a can guide a most part of light emitted from the cold cathode tubes 17 to the opening side of the chassis 14.

The optical member 15 has functions to convert the linear light emitted from each cold cathode tube 17 into flat one and, further, to direct the light toward an effective display area in the liquid crystal panel 11, etc. Furthermore the optical member 15 is formed in a rectangular shape that is long sideways similar to the liquid crystal panel 11 and the chassis 14. The optical member 15 is sufficiently provided with a configuration as illustrated in Fig. 5. Specifically, a diffusing sheet 27 and a lens sheet 28 are stuck together. The diffusing sheet 27 has a base material made of translucent synthetic resin having innumerable light-scattering particles dispersed therein. The lens sheet 28 has a lens portion (a convex cylindrical lens group) 30 having a plurality of convex cylindrical lenses 29 disposed in parallel arrangement on a translucent base material (a translucent sheet) 26. The convex cylindrical lenses in this case have semicircular column-shaped convex lenses extending in a predetermined direction.

Light-reflective layers 32 are formed in a striped manner between the diffusing sheet 27 and the lens sheet 28. The light-reflective layers 32 are selectively disposed in positions that cover boundary portions of the convex cylindrical lenses 29 in planar view. Note that translucent portions 31 are formed in the portions between the light-reflective layers 32, i.e. in positions that cover focus positions of the convex cylindrical lenses 29 in planar view. That is, the light-reflective layers 32 and the translucent portions 31 have strip shapes having predetermined widths and substantially parallel to a longitudinal direction of the convex cylindrical lenses 29; and, as a whole, form a striped shape. While the light-reflective layers 32 are formed in areas having predetermined widths centered on valleys of the respective convex cylindrical lenses 29, the translucent portions 31 are formed in areas having predetermined widths centered on valley portions of the respective convex cylindrical lenses 29. In addition to this, the translucent portions 31 are air layers having a reflective index differing from that of the diffusing sheet 27 and that of the lens sheet 28. Furthermore, the light-reflective layers 32 are composed of, for example, transparent resin etc. having minute particles of white titanium oxide dispersedly mixed therein.

Note that an arrangement cycle of the convex cylindrical lenses 29 (a lens pitch) and an arrangement cycle of the light-reflective layers 32 (a reflective layer pitch) are set substantially identically such as substantially at 140 µm. In this embodiment, as illustrated in Fig. 6, the convex cylindrical lenses 29 are disposed with inclined at a predetermined angle to outer peripheral end faces (edge side directions) 15a, 15b of the optical member 15 or, specifically, is inclined at an angle θ to a longitudinal direction. Then, along the inclination of the convex cylindrical lenses 29, the light-reflective layers 32 are also arranged with inclined at the angle θ to the longitudinal direction of the optical member 15. Note that the angle θ is designed to be from 3° to 10° or, preferably, from 4° to 7°.

Returning to Figs. 1 and 2, the cold cathode tubes 17, which are a kind of linear light source (tubular light source), are attached to the inside of the chassis 14 with the axial direction thereof aligned with the long-side direction of the chassis 14. A plurality of the cold cathode tubes 17 are arranged with the axes substantially parallel to each other and with predetermined gaps spaced therebetween.

Light emitted from the cold cathode tubes 17 passes through the translucent portions 31 of the optical member 15 and, further, is directly launched into the convex cylindrical lenses 29 while is emitted with its directivity directed toward the effective display area of the liquid crystal panel 11. On the other hand, light which does not pass through the translucent portions 31 is reflected by the light-reflective layers 32 to return to the cold cathode tubes 17 side so as to be again reflected by the reflector sheet 14a etc. The light is repetitively reflected until the light passes through the translucent portions 31. Reuse of the light is sought in this manner. Note that the light emitting direction (diffusing angle) of the optical member 15 can be suitably controlled by adjusting the ratio of the width size of the light-reflective layers 32 to the width size of the translucent portions 31.

Furthermore, in the liquid crystal display device 10 of this embodiment, the convex cylindrical lenses 29 that configure the lens sheet 28 of the optical member 15 are inclined at the angle θ to the long-side direction of the optical member 15 as described above. Accordingly, upon laminating the rectangular optical member 15 and the liquid crystal panel 11 together with four corners thereof parallel as illustrated in Fig. 1, the pixel arrangement PE of the liquid crystal panel 11 and the longitudinal direction (the extending direction) of the convex cylindrical lenses 29 are inclined at the angle θ as illustrated in Fig. 7. As a result of this, display defect such as moire that arises from interference between the pixel arrangement PE and the arrangement of the convex cylindrical lenses 29 is unlikely to be visible. Furthermore, while surely reducing such a visibility of the display defect, the uniformity of the flat light, which is the original object of the optical member 15, can be sufficiently sought.

Furthermore, because the angle θ is from 3° to 10°, the moire is surely unlikely to be visible regardless of the size of the liquid crystal panel 11 as indicated in Table 1 as below. Note that, where the angle θ is designed to be from 4° to 7° as described above, the moire is still more surely unlikely to be visible regardless of which size the liquid crystal panel 11 is. Note that, while the above-described angle range has a particular multiplicity of uses, revision of the pixel design principle, haze of the polarizing plate, etc. also can be a potential influence. In a case of considering such revision and the influence, the angle may be designed to be smaller than 3°, larger than 10°.

(Table 1)

Note that, in Table 1, "A" represents unnoticeable even when steadily gazed (excellent), "B" represents ignorable (good), "C" represents not uncomfortable but not ignorable, and "F" represents uncomfortable.

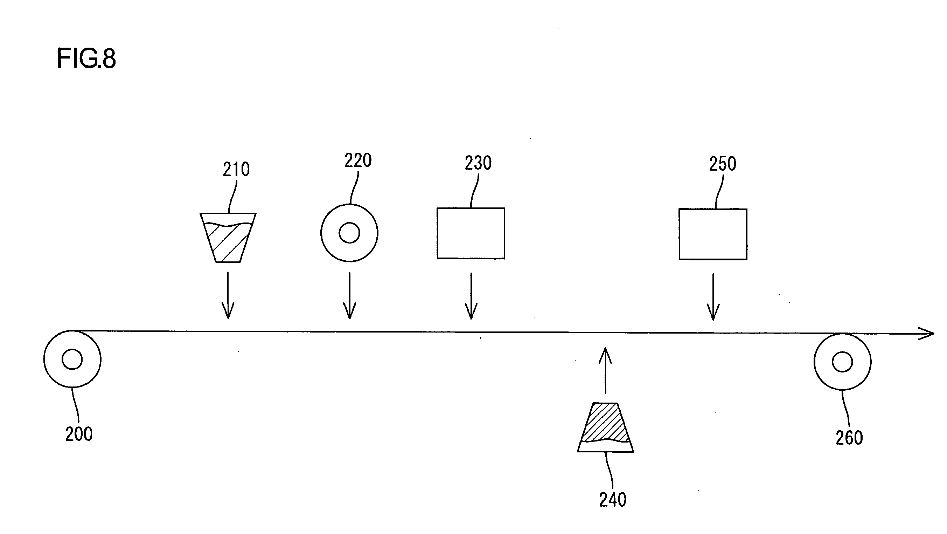

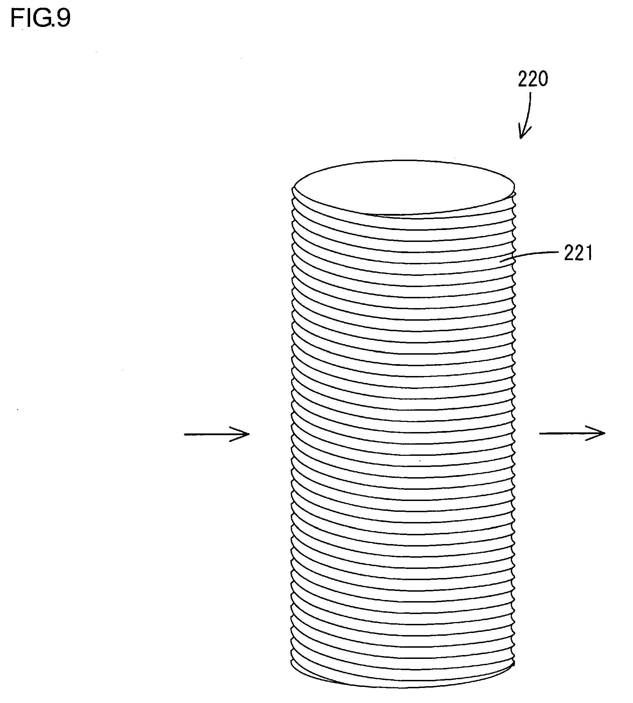

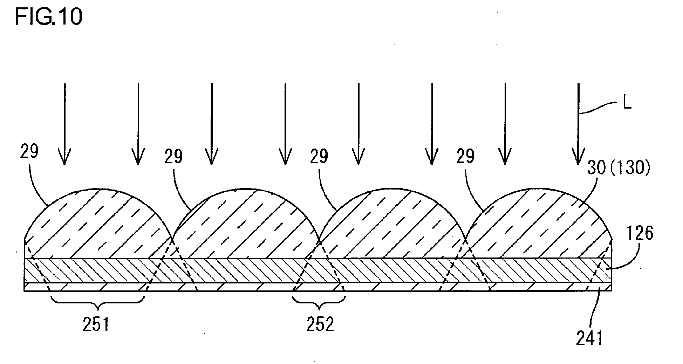

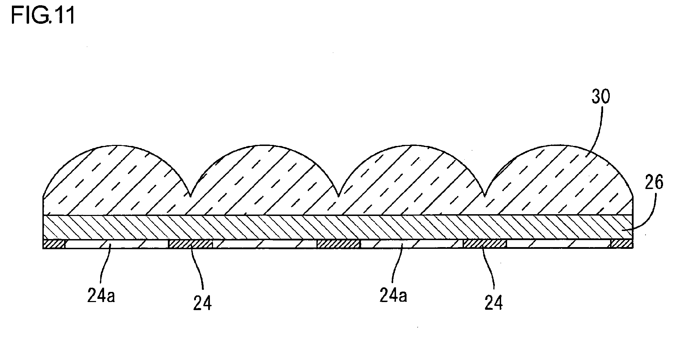

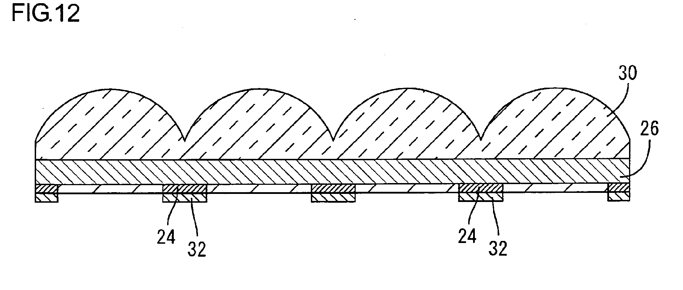

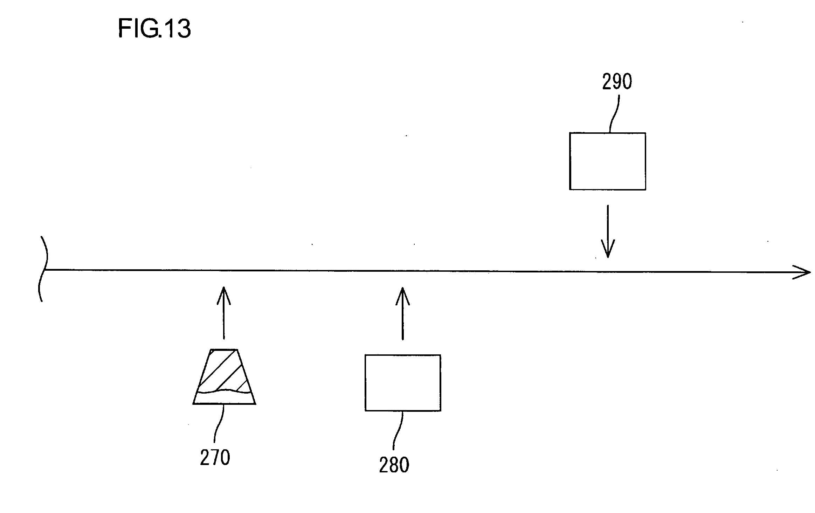

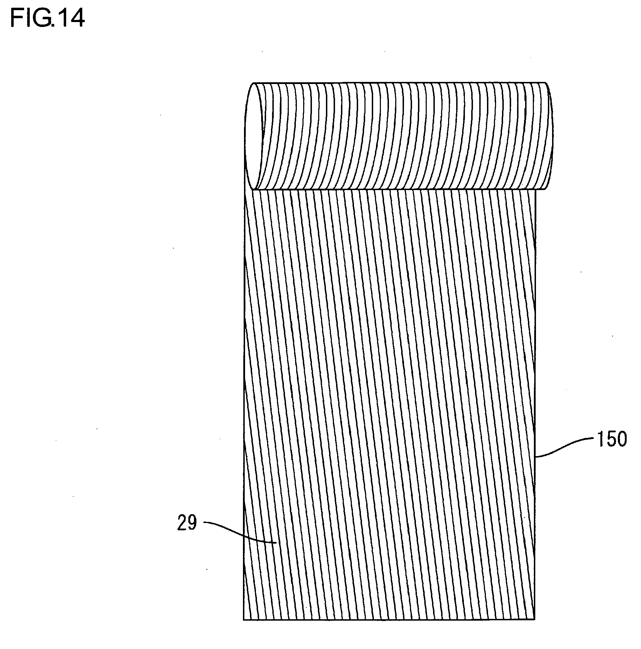

Next, a method of manufacturing the optical member 15 that the liquid crystal display device 10 of this embodiment includes will be described with reference to the drawings. Fig. 8 is an explanatory view illustrating a schematic concerning steps of manufacturing the optical member 15. Fig. 9 is an explanatory view illustrating a schematic configuration of a transfer mold used in a transfer step (a molding step). Fig. 10 is an explanatory view illustrating an exposing manner in an exposing step. Fig. 11 is an explanatory view illustrating a result of the exposing. Fig. 12 is an explanatory view illustrating a step of forming the light-reflective layers. Fig. 13 is an explanatory view illustrating steps after the light-reflective layers are formed. Fig. 14 is an explanatory view illustrating a configuration of a parent material for use in manufacturing the optical member (hereinafter referred to simply as a parent material) 150 that is manufactured in the steps of Figs. 8 through 13.

First, prior to manufacturing the optical member 15, a translucent sheet roll 126 to configure the translucent sheet 26 of the optical member 15 is provided (see Fig. 10). The translucent sheet roll 126 is set to a feeding roller 200 so as to be successively conveyed in a longitudinal direction thereof and at a predetermined speed to a production line. Note that a sheet roll made of polyester such as PET can be adopted to the translucent sheet roll 126 in this case.

In a first step, a hardening resin layer 130 (see Fig. 10) made of acrylic resin such as PMMA is formed on a face of the conveyed translucent sheet roll 126. In this case, a technique that involves applying unhardened resin from a storage tank 210 onto the roll 126 or a technique that involves sticking by printing etc. can be adopted. Furthermore, acrylic resin, carbonate resin, etc., which are translucent resins that is hardened by heat irradiation or ultraviolet light irradiation, can be adopted to the hardening resin.

Next, a lens shape is transferred to the hardening resin layer 130. Specifically, the shape transfer is performed using a transfer mold 220 illustrated in Fig. 9. The transfer mold 220 is to mold the hardening resin layer 130 of the conveyed sheet 126 and is configured by a drum-like roller having a concave lens shape 221 formed on a surface thereof. Then, this roller abuts on the sheet 126 while rotating as the sheet 126 is being conveyed. Here, the concave lens shape 221 is characteristic: it is formed on a peripheral face of the roller in a spiral manner with inclined to a rotating direction of the roller. The shape is transferred using this transfer mold 220, so that the convex cylindrical lens shape, which is the lens shape inclined at the predetermined angle θ to the longitudinal direction of the sheet 126 and has the plurality of semicircular column-shaped lenses disposed in parallel arrangement, is transferred. Note that the transfer mold 220 is designed so that the angle θ is within a range from 3° to 10° or, preferably, from 4° to 7°.

After the lens shape is transferred as described above, the hardening resin layer 130 is hardened by ultraviolet light irradiation. Here, the hardening resin layer 130 is irradiated with ultraviolet light using an ultraviolet irradiation device 230. Thus, the resin layer 130 is hardened and, by this hardening, the convex cylindrical lens group 30 is formed (see Fig. 10).

After the convex cylindrical lens group 30 is formed, a photosensitive adhesive layer 241 is formed on a face of the translucent sheet 126, the face being on a side opposite from a side where the convex cylindrical lens group 30 has been formed (see Fig. 10). In this case, a material that loses the adhesive properties (or is hardened) at exposed portions thereof is used for the photosensitive adhesive layer 241. That is, the material itself has the adhesive properties or sticky properties while loses the adhesive properties or sticky properties upon hardening by ultraviolet light irradiation. An example of the material is an acrylic adhesive material. The forming method may adopt a technique that involves applying the photosensitive adhesive layer 241 from a storage tank 240 to a back face side of the roll 126, a technique that involves sticking by printing etc.

Next, the photosensitive adhesive layer 241 is irradiated with ultraviolet light. Specifically, exposure L is performed using an ultraviolet irradiation device 250 (the ultraviolet irradiation device 230 may be used together with this) and through the convex cylindrical lens group 30 as illustrated in Fig. 10. With the exposure L, the convex cylindrical lenses 29, which configure the convex cylindrical lens group 30, condenses the irradiation light L. Then, in the photosensitive adhesive layer 241 as the irradiation object, positions that cover the convex portions of the convex cylindrical lenses 29 in planar view become the exposed portions, while their boundaries, i.e. boundary portions between the adjacent convex cylindrical lenses 29 become non-exposed portions 252. As a result of this, the non-exposed portions 252 maintain the adhesive properties, while the exposed portions 251 lose the adhesive properties. Thus, as illustrated in Fig. 11, adhesive layers 24 are formed in parallel arrangement in a manner covering the boundary positions of the adjacent convex cylindrical lenses 29 in planar view, while non-adhesive portions 24a are formed between the adhesive layers 24.

After the exposing is performed, light-reflective material is applied to the adhesive layers 24. Here, printing from a roller 260 is performed so that the light-reflective layers 32 are selectively adhered only to the adhesive layers 24 (see Fig. 12). Note that material composed of transparent resin (e.g. PMMA) having minute particles of white titanium oxide dispersedly mixed therein can be adopted to the light-reflective material, while aluminum oxide, barium sulfate, etc. may be used as the dispersed minute particles instead of titanium.

After the light-reflective layers 32 are formed, a diffusing sheet 271 (that configures the diffusing sheet 27) is formed on a translucent sheet 261 from a face side, the face having the light-reflective layers 32 formed thereon as illustrated in Fig. 13. Here, sticking is performed with hardening a resin interposed between the diffusing sheet 271 and the translucent sheet 261. Note that the diffusing sheet 271 is composed of base material made of translucent synthetic resin, and the base material has innumerable light-scattering particles (silica beads) that is dispersed therein and scatter light. In addition, the synthetic resin as the base material may illustratively be, for example, acrylic resin (such as polystyrene (PS), polycarbonate (PC), polymethacrylstyrene (MS), poly(methyl methacrylate) (PMMA)), polycycloolefin (Pcy), etc.

Thereafter, as illustrated in Fig. 13, ultraviolet light irradiation is performed using an ultraviolet irradiation device 280 so that the interposed hardening resin is hardened. The parent material 150 for use in manufacturing the optical member illustrated in Fig. 14 is thus obtained. The parent material 150 for use in manufacturing the optical member is roll-like and has the convex cylindrical lenses 29 inclined at the angle θ to the longitudinal direction (the edge side direction) thereof. Then, the roll-like parent material 150 for use in manufacturing the optical member is cut perpendicular to the longitudinal direction using a cutting device 290 (see Fig. 13). Thus, the optical member 15 that the liquid crystal display device 10 includes is obtained.

The above-described manufacturing method of this embodiment makes it possible to reduce the cost in manufacturing the optical member 15. Specifically, the convex cylindrical lenses 29 are formed on the translucent sheet 126 with the longitudinal direction of the convex cylindrical lenses 29 inclined to the edge side direction of the translucent sheet 126, and therefore, it is unnecessary to cut the finally obtained parent material 150 for use in manufacturing the optical member in a direction inclined to the longitudinal direction; the optical member 15 can be obtained by perpendicular cutting. Accordingly, the optical member 15 can be cut out of the parent material 150 absolutely without generating any useless loss, i.e. without reducing the cutting-out performance. Thus, the manufacturing method is super-efficient and achieves superior economies of scale.

Furthermore, in the exposing step, due to the condensing operation of the convex cylindrical lens group 30, the non-exposed portions 24 having the adhesive properties are formed in the photosensitive adhesive layer 241 correspondingly to the boundaries of the convex cylindrical lenses 29 configuring the convex cylindrical lens group 30, and the light-reflective layers 32 are adhesively formed on the non-exposed portions 24 having the adhesive properties. That is, the light-reflective layers 32 composed of the light-reflective material are selectively formed in an arrangement along the inclination of the convex cylindrical lenses 29 and, as a result of this, with the longitudinal direction of the light-reflective layers 32 also inclined to the longitudinal direction (the edge side direction) of the translucent sheet 126. Thus, the convex cylindrical lenses 29 is formed with inclined to the longitudinal direction of the translucent sheet 126, so that, the photosensitive adhesive layer 241 is exposed through the lenses 29 and, thereafter, the light-reflective material is applied, with this technique, the light-reflective layers 32 can be selectively formed correspondingly to the lens boundary portions in the extremely simple and easy manner. Then, finally, it is only necessary for the parent material 150 for use in manufacturing the optical member, the parent material 150 including the lenses 29 and the light-reflective layers 32, to be cut perpendicularly to the longitudinal direction of the parent material 150 so that the lenses 29 that are inclined to the edge side direction of the translucent sheet 26 can be formed.

### <Other Embodiments>

The present invention is not limited to the embodiment described as above with the drawings; for example, following embodiments are also included within the technical scope of the present invention. For example, while the liquid crystal display device of the above-described embodiment illustratively uses the liquid crystal panel as the display panel, the present invention can be adopted to a display device that uses a liquid crystal panel of another type.

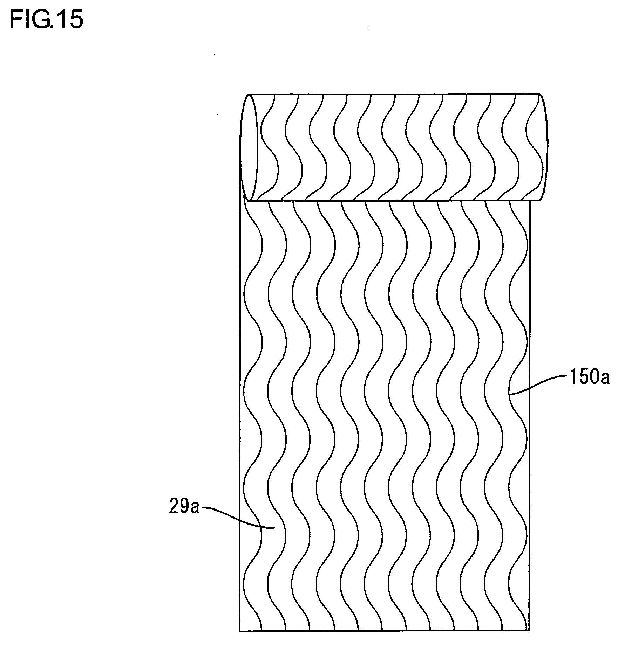

Furthermore, in the above-described embodiment, the convex cylindrical lenses 29 having the longitudinal direction inclined to the longitudinal direction of the optical member 15 is configured. From a standpoint of obviating the defect that moire is visible, convex cylindrical lenses 29a having, for example, a zigzag structure repetitively meandering in the longitudinal direction as illustrated in Fig. 15 may be configured. Such a zigzag structure also causes the displacement from the pixel arrangement PE, and the visibility of moire can be suitably prevented or reduced. That is, the effect same as that of a substantially smaller lens pitch can be obtained, so that moire can be avoided.

Note that, also in this case, the meandering of the convex cylindrical lenses 29a may be inclined at from 3° to 10° or, preferably, at from 4° to 7° to the edge side direction of the translucent sheet 26 (i.e. the longitudinal direction of an optical member 150a). Furthermore, such a zigzag structure can be obtained by making the concave lens shape 221 of the transfer mold 220 into a similar zigzag structure. Furthermore, a cyclic meandering pattern or a random meandering pattern may be designed for the zigzag structure.

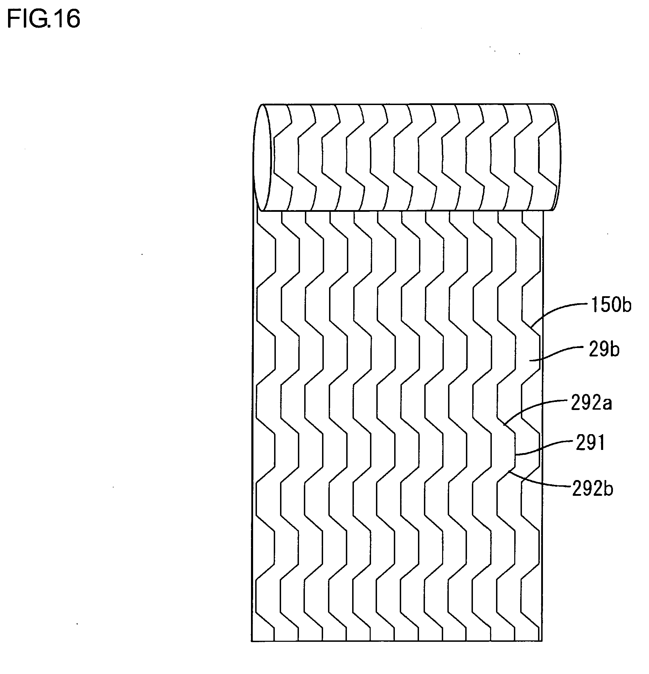

Furthermore, for example, as illustrated in Fig. 16, convex cylindrical lenses 29b may be configured in a shape having a first side portion 291 and second side portions 292a, 292b that are repetitively formed in a longitudinal direction thereof, the first side portion being parallel to the edge side direction of the translucent sheet 26 (i.e. the longitudinal direction of an optical member 150b), the second side portions being inclined to the edge side direction of the translucent sheet 26 (i.e. the longitudinal direction of the optical member 150b). Also in this case, at least the second side portions 292a, 292b cause the displacement from the pixel arrangement PE, and the visibility of moire can suitably be prevented or be reduced.

Note that, also in this case, the inclination of the second side portions 292a, 292b may be designed to be from 3° to 10° or, preferably, from 4° to 7° to the edge side direction of the translucent sheet 26 (i.e. the longitudinal direction of the optical member 150b) . Furthermore, the first side portion 291 and the second side portions 292a, 292b can be obtained by making the concave lens shape 221 of the transfer mold 220 into a first side portion and second side portions of a similar shape. Furthermore, a cyclic pattern or a random pattern may be designed for the first side portion and the second side portions in that shape.

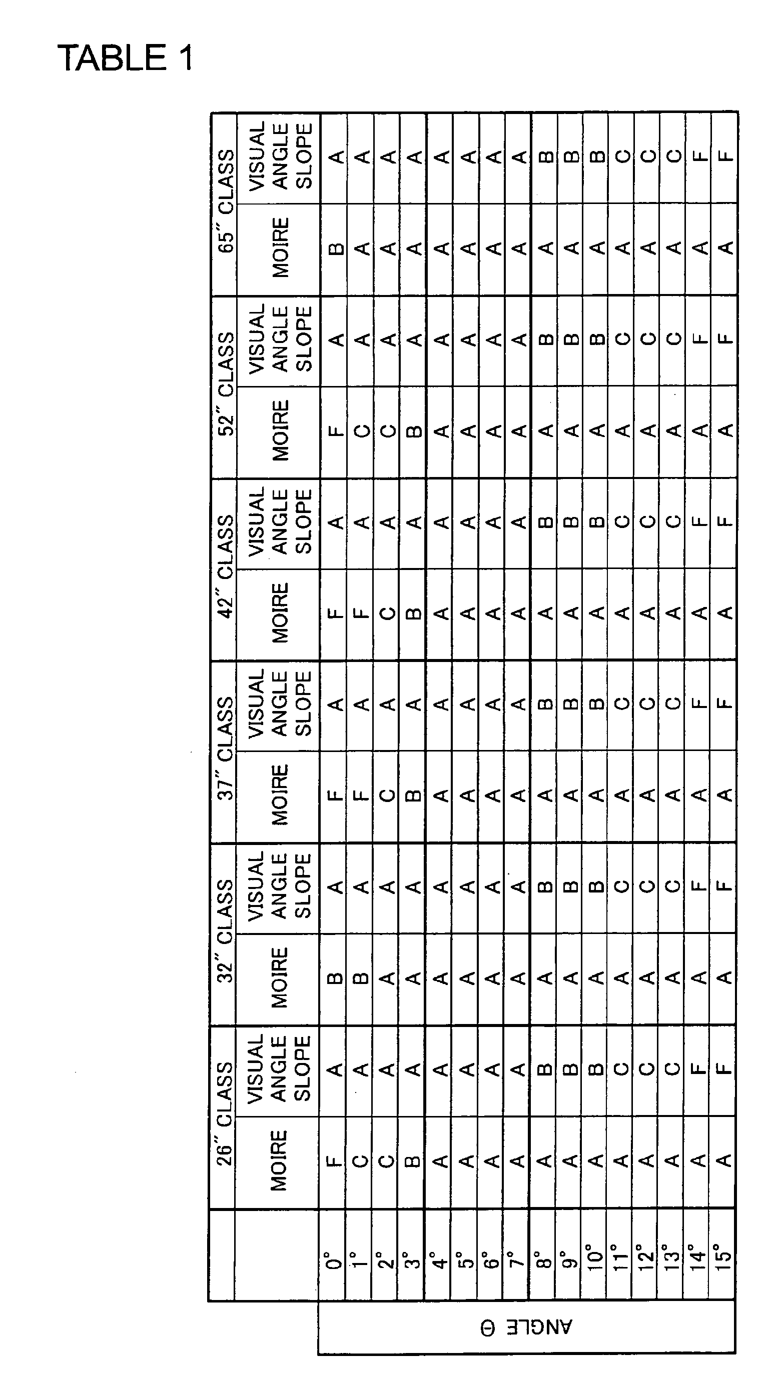

## Claims

1. An optical member manufacturing method **characterized by** including the steps of:
forming a hardening resin layer on a face of a translucent sheet;
molding the hardening resin into a shape of a convex lens group having a plurality of convex lenses disposed in parallel arrangement;
hardening the hardening resin layer;
forming a photosensitive adhesive layer on a face of the translucent sheet, the face being on a side opposite from a side where the convex lens group has been formed;
exposing the photosensitive adhesive layer through the convex lens group; and
forming a light-reflective material on the photosensitive adhesive layer after the exposing is performed,
wherein:
the molding step is to mold the shape of the convex lens group with a longitudinal direction of the convex lenses inclined to an edge side direction of the translucent sheet;
in the exposing step, a non-exposed portion is formed in the photosensitive adhesive layer correspondingly to a boundary portion due to condensing operation of the convex lens group so that the non-exposed portion shall include adhesive properties while an exposed portion not including the adhesive properties, the boundary portion being between the convex lenses configuring the convex lens group; and
in the step of forming the light-reflective material, the light-reflective material is selectively formed on the non-exposed portion of the photosensitive adhesive layer.

2. The optical member manufacturing method according to claim 1, the method being **characterized in that**:
in the molding step, the longitudinal direction of the convex lenses is inclined at from 3° to 10° to the edge side direction of the translucent sheet.

3. The optical member manufacturing method according to claim 1, the method being **characterized in that**:
in the molding step, the longitudinal direction of the convex lenses is inclined at from 4° to 7° to the edge side direction of the translucent sheet.

4. An optical member manufacturing method **characterized by** including the steps of:
forming a hardening resin layer on a face of a translucent sheet;
molding the hardening resin into a shape of a convex lens group having a plurality of convex lenses disposed in parallel arrangement;
hardening the hardening resin layer;
forming a photosensitive adhesive layer on a face of the translucent sheet, the face being on a side opposite from a side where the convex lens group has been formed;
exposing the photosensitive adhesive layer through the convex lens group; and
forming a light-reflective material on the photosensitive adhesive layer after the exposing is performed,
wherein:
the molding step is to mold each of the convex lenses in a shape having a zigzag structure repetitively meandering in a longitudinal direction thereof;
in the exposing step, a non-exposed portion is formed in the photosensitive adhesive layer correspondingly to a boundary portion due to condensing operation of the convex lens group so that the non-exposed portion shall include adhesive properties while an exposed portion not including the adhesive properties, the boundary portion being between the convex lenses configuring the convex lens group; and
in the step of forming the light-reflective material, the light-reflective material is selectively formed on the non-exposed portion of the photosensitive adhesive layer.

5. The optical member manufacturing method according to claim 4, the method being **characterized in that**:
in the molding step, the meandering of the convex lenses is inclined at from 3° to 10° to an edge side direction of the translucent sheet.

6. The optical member manufacturing method according to claim 4, the method being **characterized in that**:
in the molding step, the meandering of the convex lenses is inclined at from 4° to 7° to the edge side direction of the translucent sheet.

7. An optical member manufacturing method **characterized by** including the steps of:
forming a hardening resin layer on a face of a translucent sheet;
molding the hardening resin into a shape of a convex lens group having a plurality of convex lenses disposed in parallel arrangement;
hardening the hardening resin layer;
forming a photosensitive adhesive layer on a face of the translucent sheet, the face being on a side opposite from a side where the convex lens group has been formed;
exposing the photosensitive adhesive layer through the convex lens group; and
forming a light-reflective material on the photosensitive adhesive layer after the exposing is performed,
wherein:
the molding step is to mold each of the convex lenses in a shape having a first side portion and a second side portion that are repetitively formed in a longitudinal direction thereof, the first side portion being parallel to an edge side direction of the translucent sheet, the second side portion being inclined to the edge side direction of the translucent sheet;
in the exposing step, a non-exposed portion is formed in the photosensitive adhesive layer correspondingly to a boundary portion due to condensing operation of the convex lens group so that the non-exposed portion shall include adhesive properties while an exposed portion not including the adhesive properties, the boundary portion being between the convex lenses configuring the convex lens group; and
in the step of forming the light-reflective material, the light-reflective material is selectively formed on the non-exposed portion of the photosensitive adhesive layer.

8. The optical member manufacturing method according to claim 7, the method being **characterized in that**:
in the molding step, the second side portions are inclined at from 3° to 10° to the edge side direction of the translucent sheet.

9. The optical member manufacturing method according to claim 7, the method being **characterized in that**:
in the molding step, the second side portions are inclined at from 4° to 7° to the edge side direction of the translucent sheet.

10. The optical member manufacturing method according to any one of claims 1 to 9, the method being **characterized by** including the step of:
after the step of forming the light-reflective material, forming a diffusing sheet on a face on a side where the light-reflective material has been formed.

11. A parent material for use in manufacturing an optical member, the parent material being **characterized by** including:
a translucent sheet;
a convex lens group that is formed on a face of the translucent sheet and has a plurality of convex lenses disposed in parallel arrangement; and
a light-reflective layer selectively disposed on a face of the translucent sheet and correspondingly to a boundary portion of the convex lenses configuring the convex lens group, the face being on a side opposite from a side where the convex lens group has been formed,
wherein:
the convex lens group is disposed in an arrangement with a longitudinal direction of the convex lenses inclined to an edge side direction of the translucent sheet.

12. The parent material for use in manufacturing the optical member according to claim 11, the parent material being **characterized in that**:
the longitudinal direction of the convex lenses is inclined at from 3° to 10° to the edge side direction of the translucent sheet.

13. The parent material for use in manufacturing the optical member according to claim 11, the parent material being **characterized in that**:
the longitudinal direction of the convex lenses is inclined at from 4° to 7° to the edge side direction of the translucent sheet.

14. A parent material for use in manufacturing an optical member, the parent material being **characterized by** including:
a translucent sheet;
a convex lens group that is formed on a face of the translucent sheet and has a plurality of convex lenses disposed in parallel arrangement; and
a light-reflective layer selectively disposed on a face of the translucent sheet and correspondingly to a boundary portion of the convex lenses configuring the convex lens group, the face being on a side opposite from a side where the convex lens group has been formed,
wherein:
the convex lens group has each of the convex lenses configured in a shape having a zigzag structure repetitively meandering in a longitudinal direction thereof.

15. The parent material for use in manufacturing the optical member according to claim 13, the parent material being **characterized in that**:
the meandering of the convex lenses is inclined at from 3° to 10° to the edge side direction of the translucent sheet.

16. The parent material for use in manufacturing the optical member according to claim 13, the parent material being **characterized in that**:
the meandering of the convex lenses is inclined at from 4° to 7° to the edge side direction of the translucent sheet.

17. A parent material for use in manufacturing an optical member, the parent material being **characterized by** including:
a translucent sheet;
a convex lens group that is formed on a face of the translucent sheet and has a plurality of convex lenses disposed in parallel arrangement; and
a light-reflective layer selectively disposed on a face of the translucent sheet and correspondingly to a boundary portion of the convex lenses configuring the convex lens group, the face being on a side opposite from a side where the convex lens group has been formed,
wherein:
the convex lens group has each of the convex lenses configured in a shape having a first side portion and a second side portion that are repetitively formed in a longitudinal direction thereof, the first side portion being parallel to an edge side direction of the translucent sheet, the second side portion being inclined to the edge side direction of the translucent sheet.

18. The parent material for use in manufacturing the optical member according to claim 17, the parent material being **characterized in that**:
the second side portions of the convex lenses are inclined at from 3° to 10° to the edge side direction of the translucent sheet.

19. The parent material for use in manufacturing the optical member according to claim 17, the parent material being **characterized in that**:
the second side portions of the convex lenses are inclined at from 4° to 7° to the edge side direction of the translucent sheet.

20. The parent material for use in manufacturing the optical member according to any one of claims 11 to 10, the parent material being **characterized by** further including:
a diffusing sheet adhered to the translucent sheet in a manner holding the light-reflective layer therebetween.

21. A transfer mold for use in molding a conveyed sheet, the transfer mold being **characterized by** consisting of a drum-like roller having a concave lens shape formed on a surface thereof,
wherein:
the roller abuts on the sheet while rotating accompanying the conveyance of the sheet; and
the concave lens shape is formed with inclined to a rotating direction of the roller.

22. The transfer mold according to claim 21 **characterized in that**:
the concave lens shape is formed in a spiral manner on a peripheral face of the roller.

23. A lighting device for use in a display device, the lighting device being **characterized by** including:
a light source; and
an optical member that is cut out of a parent material according to any one of claims 11 to 20, the parent material being for manufacturing an optical member, wherein the optical member is disposed on a light emission side of the light source.

24. A display device **characterized by** including:
a lighting device according to claim 23, the lighting device being for use in the display device; and
a display panel disposed on a light emission side of the lighting device for use in the display device.

25. The display device according to claim 24, the display device being **characterized in that**:
the display panel is a liquid crystal panel having a liquid crystal layer held between a pair of substrates.

26. A television receiver **characterized by** including a display device according to claim 24 or 25.
